# EUROPÄISCHE PATENTANMELDUNG

(11) **EP 1 887 503 A1**
(43) Veröffentlichungstag der Anmeldung: **13.02.2008**
(21) Anmeldenummer: 07014259.1
(22) Anmeldetag: 20.07.2007
(51) Int. Cl.: G06Q 10/00

(54) **Verfahren und System zur Durchführung eines Zahlungsvorgangs mit einem Zahlungsmittel**

(30) Priorität: 09.08.2006 DE 102006037167
(71) Anmelder: Deutsche Telekom AG, 53113 Bonn (DE)
(72) Erfinder: Daussmann, Frank, 67454 Hassloch (DE); Hoepelman, Jakob Ph., 71272 Renningen (DE); Trinkel, Marian, 52372 Kreuzau Ot Untermaubach (DE)

(57) **Zusammenfassung**

Die Erfindung betrifft ein Verfahren zur Durchführung eines Zahlungsvorgangs mit einem Zahlungsmittel, insbesondere einer Bank- oder Kreditkarte, an einer Vorrichtung zur Durchführung des Zahlungsvorgangs, bei dem das Zahlungsmittel standardmäßig für Zahlungsvorgänge, zumindest an der genannten Vorrichtung gesperrt ist, und durch ein Anwählen einer Netzkennung (5) eines Telekommunikationsnetzes (6,7) mittels eines, insbesondere mobilen Kommunikationsgerätes (4) das Zahlungsmittel zur Durchführung des Zahlvorganges zumindest an der genannten Vorrichtung (2) entsperrt wird. Die Erfindung betrifft weiterhin ein System zur Durchführung eines Zahlungsvorganges mit einem Zahlungsmittel, insbesondere einer Bank- oder Kreditkarte, umfassend wenigstens eine Vorrichtung zur Durchführung des Zahlungsvorganges, bei dem ein Zahlungsmittel standardmäßig für Zahlungsvorgänge an der wenigstens einen genannten Vorrichtung gesperrt ist, und durch ein Anwählen einer Netzkennung (5) eines Telekommunikationsnetzes (6,7) mittels eines, insbesondere mobilen Kommunikationsgerätes (4) ein Zahlungsmittel zur Durchführung des Zahlungsvorganges an wenigstens einer der genannten Vorrichtungen (2) entsperrt wird.

## Beschreibung

Die Erfindung betrifft ein Verfahren und ein System zur Durchführung eines Zahlungsvorgangs mit einem Zahlungsmittel.

Verfahren und Systeme zur Durchführung eines Zahlungsvorgangs mit einem Zahlungsmittel sind im Stand der Technik hinreichend bekannt. Unter Zahlungsmitteln werden hier beispielsweise Mittel, wie Bank- oder Kreditkarten oder sonstige Mittel verstanden, mit denen bargeldlos ein Zahlungsvorgang durchgeführt werden kann. Neben den vorgenannten Karten sind darüber hinaus heutzutage auch andere Mittel bekannt, um Zahlungsvorgänge durchzuführen, wie beispielsweise Mobiltelefone.

Als Zahlungsvorgang wird dabei im Sinne der Erfindung jeglicher Vorgang verstanden, bei dem Geld transferiert wird. Es kann sich hierbei beispielsweise um einen Bezahlungsvorgang handeln, wenn z.B. ein Kunde in einem Kaufhaus mittels eines Zahlungsmittels, wie z.B. der vorgenannten Bank- oder Kreditkarte eine Ware erwirbt, so dass ein Kunde hier kein Bargeld aushändigt, sondern lediglich das Zahlungsmittel, wobei der Zahlungsempfänger das Geld von der Bank- bzw. dem Kreditinstitut angewiesen bekommt und dem Kunden das Konto in entsprechender Höhe belastet wird.

Unter einem Zahlungsvorgang im Sinne der Erfindung werden auch Vorgänge verstanden, bei denen eine Person z.B. die Auszahlung von Bargeld an einem Geldautomaten vornimmt. Hierzu wird üblicherweise ebenso ein Zahlungsmittel, wie eine Bank- oder Kreditkarte, an dem Geldautomaten verwendet, der sodann einen Zahlungsvorgang im Sinne einer Auszahlung vornimmt, so dass die Person das Bargeld erhält, wobei das Konto der betreffenden Person in der Höhe des ausgezahlten Bargeldbetrags belastet wird. Jegliche andere bargeldlosen Zahlungsvorgänge fallen ebenso unter die Erfindung.

Bei den im Stand der Technik bekannten Zahlungsmitteln liegt grundsätzlich ein gültiges Zahlungsmittel vor, welches auch im Missbrauchsfall von fremden Personen, also denen das Zahlungsmittel nicht gehört, verwendet werden kann, beispielsweise wenn Unterschriften gefälscht werden oder zugehörige Geheimzahlen oder PINs ausspioniert werden.

Um nach dem Verlust eines derartigen bekannten Zahlungsmittels einen Missbrauch zu verhindern, muss explizit das Zahlungsmittel gesperrt werden, beispielsweise durch einen hinweisenden Anruf bei der Bank bzw. dem Kreditinstitut. Es besteht somit gemäß den im Stand der Technik bekannten Zahlungsmitteln zumindest immer in dem Zeitraum zwischen Verlust und Feststellung des Verlustes des Zahlungsmittels die Möglichkeit für nicht autorisierte Dritte, das Zahlungsmittel zu verwenden und so diejenige Person, der das Zahlungsmittel eigentlich gehört, zu schädigen.

Aufgabe der Erfindung ist es, ein Verfahren und ein System bereitzustellen, mit denen die Durchführung von Zahlungsvorgängen mittels Zahlungsmitteln, z.B. der eingangs genannten Art, also bargeldlosen Zahlungsmitteln, sicherer gestaltet werden kann.

Diese Aufgabe wird erfindungsgemäß durch ein Verfahren der vorbeschriebenen gattungsgemäßen Art gelöst, bei dem das Zahlungsmittel standardmäßig für Zahlungsvorgänge, zumindest an der vorgenannten Vorrichtung, gesperrt ist und bei dem weiterhin durch ein Anwählen einer Netzkennung eines Telekommunikationsnetzes mittels eines, insbesondere mobilen Kommunikationsgerätes, das Zahlungsmittel zur Durchführung des Zahlungsvorgangs zumindest an der genannten Vorrichtung entsperrt wird.

Die Erfindung wird weiterhin gelöst durch ein System zur Durchführung eines Zahlungsvorgangs mit einem Zahlungsmittel, insbesondere einer Bank- oder Kreditkarte, umfassend wenigstens eine Vorrichtung zur Durchführung des Zahlungsvorgangs, bei dem ein Zahlungsmittel standardmäßig für Zahlungsvorgänge an der wenigstens einen genannten Vorrichtung gesperrt ist und bei dem durch ein Anwählen einer Netzkennung eines Telekommunikationsnetzes mittels eines, insbesondere mobilen Kommunikationsgerätes ein Zahlungsmittel zur Durchführung des Zahlungsvorgangs an wenigstens einer der genannten Vorrichtungen entsperrbar ist.

Wesentlicher Kerngedanke der Erfindung ist es somit, in Abkehr vom Stand der Technik, wo Zahlungsmittel generelle Gültigkeit haben und ausdrücklich gesperrt werden müssen für den Fall der Verhinderung eines Missbrauchs nunmehr gemäß der Erfindung ein Verfahren zu verwenden, bei dem ein Zahlungsmittel, beispielsweise der eingangs genannten Art, standardmäßig gesperrt ist, so dass grundsätzlich auch von dem Eigentümer des Zahlungsmittels oder demjenigen, dem das Zahlungsmittel zugeordnet ist, also beispielsweise dem Kunden einer Bank oder eines Kreditinstitutes, keine Zahlungsvorgänge mit dem Zahlungsmittel ausgeführt werden können, solange bis das Zahlungsmittel zur Durchführung eines Zahlungsvorgangs im Rahmen einer durchgeführten Telekommunikation entsperrt bzw. freigeschaltet wird.

Hierbei kann zur Durchführung der Kommunikation jegliches geeignetes Kommunikationsgerät und jegliches zur Verfügung stehendes Telekommunikationsnetz eingesetzt werden. In bevorzugter Ausführung kann es dabei vorgesehen sein, ein mobiles Kommunikationsgerät, wie beispielsweise ein Mobiltelefon zu verwenden, da ein Nutzer, der das Verfahren bzw. ein System gemäß der Erfindung nutzen möchte, ortsungebunden eine derartige Nutzung durchführen kann. Bei dem Telekommunikationsnetz kann es sich somit zumindest teilweise um das Mobilfunknetz bzw. gegebenenfalls auch um das Telefon-Festnetz handeln.

Gemäß der Erfindung kann es sodann vorgesehen sein, dass im Rahmen des Verfahrens bzw. des Systems sich ein Nutzer während der durchgeführten Telekommunikation, wofür der Nutzer ein Kommunikationsgerät einsetzt, seine Berechtigung nachweist, um mit einem Zahlungsmittel einen Zahlungsvorgang durchzuführen. Beispielsweise kann die nutzende Person sich und/oder das eingesetzte Zahlungsmittel identifizieren bzw. verifizieren.

Gemäß einem Aspekt der Erfindung kann es vorgesehen sein, dass die vorangehend genannte Netzkennung eines Telekommunikationsnetzes, die es mittels eines Kommunikationsgerätes anzuwählen gilt, der nutzenden Person selbst zugeordnet ist. So kann die Netzkennung selbst bereits ein Sicherheitsmerkmal darstellen, welches nur der berechtigten Person bekannt ist, die diese Netzkennung einsetzen möchte. Eine solche Netzkennung kann somit Personen individuell beispielsweise von einer Bank oder einem Kreditinstitut zugewiesen werden. Mittels der Netzkennung kann hierbei neben der Identifikation der entsprechenden Person auch die Zuordnung zwischen Person und dem eingesetzten Zahlungsmittel erfolgen, so dass durch die Anwahl dieser betreffenden Netzkennung mittels eines Kommunikationsgerätes sowohl eine Identifizierung der Person erfolgt, da nur diese Person die besagte Netzkennung kennen kann und wobei weiterhin bekannt wird, welches Zahlungsmittel zur Durchführung des Zahlungsvorgangs eingesetzt werden soll.

Eine derartige Zuordnung kann insbesondere dann vorteilhafterweise erfolgen, wenn die Netzkennung weiterhin einem Dienstleister zugeordnet ist, bei dem derartige Informationen gespeichert sind. Bei dem Dienstleister kann es sich beispielsweise direkt um ein Bank- oder Kreditinstitut handeln sowie ebenso in einer Alternative auch um einen Telekommunikationsdienstleister.

Wählt demnach eine Person die besagte Netzkennung an, so kann es gemäß der Erfindung vorgesehen sein, dass ein bestimmtes identifiziertes Zahlungsmittel, in anderer Ausführung gegebenenfalls auch alle Zahlungsmittel, die einer Person zur Verfügung stehen, für die Durchführung von Zahlungsvorgängen entsperrt, d.h. freigeschaltet werden, so dass ein betreffendes Zahlungsmittel genutzt werden kann.

Hierbei kann es unabhängig von der vorbeschriebenen speziellen Ausführung vorgesehen sein, dass bei einer Entsperrung die Nutzung eines betreffenden Zahlungsmittels für jegliche beliebige Vorrichtung zur Durchführung von Zahlungsvorgängen möglich wird oder aber auch nur für bestimmte Vorrichtungen zur Durchführung von Zahlungsvorgängen, insbesondere solche, die in ein System zur Durchführung des Verfahrens eingebunden sind.

In einer anderen kumulativen oder alternativen Ausführung kann es auch vorgesehen sein, dass einer Vorrichtung zur Durchführung eines Zahlungsvorgangs, also beispielsweise einem Geldautomaten oder aber auch einem Kommunikationsterminal zur Kommunikation mit einem Kreditinstitut, also z.B. zur Durchführung von Bezahlungsvorgängen, wenigstens eine Netzkennung eines Telekommunikationsnetzes zugeordnet ist und dass durch Anwahl der Netzkennung ein Zahlungsmittel nur für eine Zahlung an der betreffenden Vorrichtung entsperrt wird. So wird eine weitere Sicherheit dadurch erreicht, dass durch eine Entsperrung nicht eine generelle Möglichkeit besteht, ein Zahlungsmittel einzusetzen, sondern nur die Möglichkeit, ein Zahlungsmittel an einer speziellen, durch die Netzkennung definierten Vorrichtung zur Durchführung des Zahlungsvorgangs.

Bezogen auf alle möglichen Ausführungen, d.h. insbesondere unabhängig davon, ob eine Netzkennung einer Vorrichtung zur Durchführung eines Zahlvorgangs und/oder einer Person und/oder einem Zahlungsmittel zugeordnet ist oder auch allgemein einem Dienst zum Entsperren von Zahlungsmitteln kann es gemäß der Erfindung vorgesehen sein, dass durch die Anwahl einer Netzkennung der Standort des benutzten Kommunikationsgerätes ermittelt wird und ein Zahlungsmittel, z.B. nur ein spezielles Zahlungsmittel, welches während der Kommunikation, gegebenenfalls durch Rückfrage oder Bestätigung festgelegt wird oder gegebenenfalls jegliches Zahlungsmittel eines Benutzers entsperrt wird für eine Zahlung an wenigstens einer Vorrichtung zur Durchführung des Zahlungsvorgangs, welches sich in der Umgebung des ermittelten Standortes des Kommunikationsgerätes befindet.

Wesentlich für diesen erfindungsgemäßen Verfahrensschritt ist es, dass einem Kommunikationsgerät, welches in ein Telekommunikationsnetz eingebunden ist, üblicherweise selbst eine Geräte- oder Netzkennung bzw. Anschlusskennung zugeordnet ist. Bei einem Festnetztelefon kann dies die sogenannte CLI, die Call Line Identity, sein, die dem Anschluss des Kommunikationsgerätes zugeordnet ist.

Bei einem Mobiltelefon kann es sich um eine Kennung handeln, welche die Funkzelle definiert, in der sich das Mobiltelefon befindet, wie beispielsweise das HLR, das Home Location Register. Bezogen auf Internetanwendungen kann es sich um eine dauernde oder nur temporär zugewiesene IP-Adresse eines Internetrechners handeln. Anhand dieser Kennungen kann auch unmittelbar die Berechtigung eines Nutzers geprüft werden, ein Zahlungsmittel zur Durchführung eines Zahlungsvorgangs zu verwenden.

Durch sämtliche vorgenannte Netzkennungen ist jeweils auch der Ort des verwendeten Kommunikationsgerätes ermittelbar, so dass in Kenntnis des Ortes auch festgestellt werden kann, welche Vorrichtungen zur Durchführung des Zahlungsvorgangs sich in der Umgebung des aktuellen Standortes des Kommunikationsgerätes befinden. Es kann somit im Rahmen des erfindungsgemäßen Verfahrens ein Zahlungsmittel entsperrt werden zur Durchführung eines Zahlungsvorgangs an einem oder mehreren bestimmten Vorrichtungen zur Durchführung von Zahlungsvorgängen, die sich in einer bestimmten Ortsumgebung um das Kommunikationsgerät herum befinden. Hierbei kann z.B. ein vorbestimmter Radius um den ermittelten Standort des Kommunikationsgerätes die örtliche Umgebung definieren.

Dies ist insbesondere dann vorteilhaft, wenn die Netzkennung, welche im Rahmen des Verfahrens mit dem Kommunikationsgerät angewählt wird, nicht selbst schon die Vorrichtung zur Durchführung des Zahlungsvorgangs identifiziert, sondern beispielsweise hierdurch die nutzende Person, das Zahlungsmittel oder das benutzte Kommunikationsgerät oder ein allgemeiner Dienst zum Entsperren von Zahlungsmitteln aufgerufen wird.

Insbesondere wenn es sich um einen allgemeinen Dienst zum Entsperren von Zahlungsmitteln handelt, kann durch die örtliche Lokalisierung wie vorbeschrieben die betreffende Vorrichtung zur Durchführung des Zahlungsvorgangs bestimmt werden, wohingegen weitere Maßnahmen vorgesehen sein können, um die Person bzw. das eingesetzte Zahlungsmittel zu identifizieren, z.B. Abfragemaßnahmen durch eine Sprachdialogsystem oder Biometrieerkennung (Sprache, Gesicht, Fingerabdruck, Iris etc).

Hierfür kann es beispielsweise auch vorgesehen sein, dass eine angewählte Netzkennung einem Dienstleister, insbesondere einem Bank- oder Kreditinstitut, zugeordnet ist, welcher bei einer Anwahl das Zahlungsmittel zur Durchführung eines Zahlungsvorgangs zumindest an einer Vorrichtung zur Durchführung des Bezahlvorgangs entsperrt.

Bei allen Ausführungen kann es vorgesehen sein, dass eine Netzkennung für jeden Kunden oder Nutzer individuell generiert wird, z.B. zufällig. Eine solche Netzkennung hat somit keinen Bezug zum Dienstleister, der die Entsperrung und/oder Zahlung durchführt. Diese Netzkennung kann somit anonym sein, so dass ein Unberechtigter nicht schon anhand der Netzkennung erkennen kann, dass es sich um eine solche zur Entsperrung von Zahlungsmitteln handelt. Es kann vorgesehen sein, dass eine solche Netzkennung oder auch jede andere Netzkennung nach ihrer Anwahl, z.B. im Telekommunikationsnetz konvertiert wird in eine Kommunikationsadresse zur Anwahl des Dienstes zur Entsperrung. Beispielsweise kann es so vorgesehen sein, dass alle so vergebenen individuellen Netzkennungen auf dieselbe tatsächliche Netzkennung zur Anwahl des Dienstes konvertiert werden.

Wie eingangs erwähnt kann aufgrund der Zuweisung einer Kennung, insbesondere Netzkennung (z.B. CLI, HLR, IP-Adresse, etc) an das verwendete Kommunikationsgerät zumindest das Kommunikationsgerät selbst, gegebenenfalls auch in ausreichendem Maße die nutzende Person identifiziert werden, so dass ein angewählter Dienstleiter, z.B. im Rahmen eines Mobiltelefonanrufs, die Möglichkeit hat, anhand der übermittelten eigenen (Netz-)Kennung des Kommunikationsgeräts, ggfs auch anhand der angewählten Netzkennung und evtl. weiterer Maßnahmen die nutzende Person bzw. das genutzte Zahlungsmittel zu identifizieren, die Berechtigung zu prüfen und das Zahlungsmittel zu entsperren. Auch hier kann wie vorher beschrieben, eine Lokalisierung der dann verwendeten Vorrichtung zur Durchführung des Zahlungsvorgangs stattfinden.

Hier kann es in einer Weiterbildung auch vorgesehen sein, dass das Zahlungsmittel oder der Nutzer nach einer Anwahl der Netzkennung gegenüber dem Dienstleister separat identifiziert und/oder verifiziert wird. Neben der ausdrücklichen Eingabe bestimmter Kennungen durch eine nutzende Person kann wie vorangehend erwähnt eine Identifizierung auch dadurch erfolgen, dass wenigstens ein Zahlungsmittel oder Nutzer einem Kommunikationsgerät zugeordnet ist, insbesondere anhand einer Geräte- und/oder Anschlusskennung des Kommunikationsgerätes. Es können demnach intern bei dem Betreiber eines Telekommunikationsnetzes oder aber bei einem vorgenannten Dienstleister Listen darüber vorliegen, welches bzw. welche Zahlungsmittel zu einem Kommunikationsgerät zugeordnet sind, so dass eine Entsperrung dieser gelisteten Zahlungsmittel erfolgt, wenn das betreffende Kommunikationsgerät verwendet wird. Hierbei kann neben den vorgenannten Kennungen beispielsweise auch die Gerätenummer, d.h. die IMEI, oder aber auch eine Kennung einer SIM-Karte, wie beispielsweise bei Mobiltelefonen eingesetzt werden.

In sämtlichen möglichen Ausführungen der Erfindung kann es vorgesehen sein, dass eine Entsperrung eines Zahlungsmittels nur für eine vorgegebene bzw. eine vorgebbare Zeit erfolgt. Eine solche Zeit kann beispielsweise systemintern vorgegeben sein, es kann jedoch auch vorgesehen sein, dass ein Nutzer, der das Verfahren bzw. das erfindungsgemäße System nutzen möchte, selbst die Zeit auswählen kann, die ihm verbleibt, um ein entsperrtes Zahlungsmittel zu verwenden. Gemäß der Erfindung kann es sodann vorgesehen sein, dass automatisch nach Ablauf dieser Zeit wiederum eine Sperrung des Zahlungsmittels erfolgt.

In einer anderen Ausführung kann es auch vorgesehen sein, dass ein entsperrtes Zahlungsmittel nicht erst nach Ablauf einer bestimmten Zeit, sondern unmittelbar automatisch nach Beendigung des Zahlungsvorgangs wieder gesperrt wird. Die Beendigung des Zahlungsvorgangs ist üblicherweise bekannt, insbesondere dann, wenn beispielsweise Geld an einem Automaten ausgezahlt wird und der Automat diesen Vorgang beendet hat oder aber wenn z.B. in einem Geschäft ein Zahlvorgang an einem Kreditkartenterminal beendet wurde. Es kann sodann nach Beendigung des Zahlungsvorgangs eine Rückmeldung, z.B. über das Telekommunikationsnetz erfolgen, so dass seitens eines vorgenannten Dienstleisters oder Netzbetreibers wieder automatisch die Sperrung des einen oder aller Zahlungsmittel erfolgen kann.

Bereits eingangs wurde erwähnt, dass mittels des verwendeten Kommunikationsgerätes, wie beispielsweise eines Mobiltelefons, welches eine Person immer mit sich tragen kann, sowohl eine Identifizierung der Person als auch gegebenenfalls eine Identifizierung des oder der verwendeten Zahlungsmittel erfolgen kann. Hierbei kann eine Identifizierung der Person automatisch zu dem zugeordneten Zahlungsmittel führen, beispielsweise wenn ein entsprechender Dienstleister Informationen darüber vorhält, welche Zahlungsmittel von einer bestimmten Person eingesetzt werden.

Diese und sämtliche anderen Identifizierungen, die im Rahmen der Erfindung vorgenommen werden können, können beispielsweise dadurch erfolgen, dass eine Personidentifikationsnummer, d.h. eine PIN und/oder eine Transaktionsnummer, d.h. eine TAN an Kommunikationsgeräten durch die nutzende Person eingegeben wird.

In einer anderen Ausführung kann es auch vorgesehen sein, dass sich eine Person durch seine Sprache an dem Kommunikationsgerät identifiziert, beispielsweise dadurch, dass die Person aufgefordert wird, etwas Beliebiges oder ein vorgegebenes Wort oder ein Satzgebilde zu sprechen. Hierfür kann beispielsweise ein automatisches Dialogsystem eingesetzt werden.

In einer weiteren Ausführung kann es auch vorgesehen sein, dass sich die nutzende Person mittels des Kommunikationsgerätes fotografiert bzw. ein Video von sich aufnimmt bzw. durch Dritte veranlasst, dass derartige Fotos oder Videos aufgenommen werden, insbesondere von dem Gesicht der Person. Dies ist beispielsweise möglich mit modernen Mobiltelefonen, welche ebenso Foto- und Videofunktion aufweisen.

Darüber hinaus werden ebenso Mobiltelefone und sonstige Kommunikationsgeräte entwickelt, mit denen dreidimensionale Aufnahmen von Personen, insbesondere von Gesichtern von Personen möglich sind, so dass bezogen auf die vorgenannten fotografischen oder videografischen Aufnahmen der Personen bzw. der Gesichter eine Identifikation stattfinden kann, z.B. dadurch, dass bestimmte Bilddaten ausgewählt und mit gespeicherten Daten verglichen werden.

Es kann auch vorgesehen sein, dass bei einem aufgenommenen Foto oder Video der Person zur Bestätigung der Echtheit Proportionen der dargestellten Person überprüft werden und/oder bestimmte Bewegungen, wie beispielsweise auch Lippenbewegungen bei der Aussprache von Worten, beispielsweise eines bestimmten vorgegebenen Wortes und/oder dass der Bild- bzw. Videohintergrund einer ergänzenden Prüfung unterzogen wird, beispielsweise hinsichtlich Inhalt und/oder Proportionen zur dargestellten Person.

Hierdurch kann auch vermieden werden, dass eine nicht berechtigte dritte Person mittels des eingesetzten Kommunikationsgerätes lediglich ein Foto, z.B. ein Passbild der eigentlich berechtigten Person aufnimmt und zur Identifizierung einsetzt. Mittels des erfindungsgemäßen Verfahrens wäre hier feststellbar, dass es sich lediglich um ein Foto oder ein Video eines Bildes und nicht der tatsächlichen berechtigten Person handelt, so dass eine Entsperrung des Zahlungsmittels in diesem Fall verweigert würde.

Es ist darüber hinaus ebenso möglich, eine Identifizierung anhand beliebiger biometrischer Kennungen einer Person vorzunehmen, beispielsweise wenn ein Telekommunikationsgerät die Möglichkeit bietet, derartige Kennungen einer Person aufzunehmen. Dies können neben der Stimmerkennung bzw. -analyse beispielsweise auch die Überprüfung / Untersuchung von Fingerabdrücken sein. Derartige Fingerabdruckscanner können ohne Weiteres auch in einem derartigen Kommunikationsgerät integriert sein, um die nutzende Person identifizierbar machen zu können.
In anderer Ausführung kann es auch vorgesehen sein, dass eine Identifizierung der Person erfolgt durch den Besitz des Kommunikationsgerätes oder durch eine Kennung des Kommunikationsgeräts, insbesondere eine vom Kommunikationsgerät automatisch mit gesendete Kommunikationskennung (Z.B. IP-Adresse, oder CLI oder HLR etc).

Bezogen auf alle genannten Ausführungen kann es auch vorgesehen sein, dass mit/nach einem Zahlungsvorgang eine erworbene Ware und/oder Dienstleistung mittels des Kommunikationsgeräts, insbesondere über denselben Kommunikationskanal der für die Entsperrung verwendet wird, an den Nutzer übermittelt wird. Bei der Ware oder Dienstleistung kann es sich somit z.B. um kommunizierbare Waren oder Dienstleistungen handeln, insbesondere um Inhalte.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei allen anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

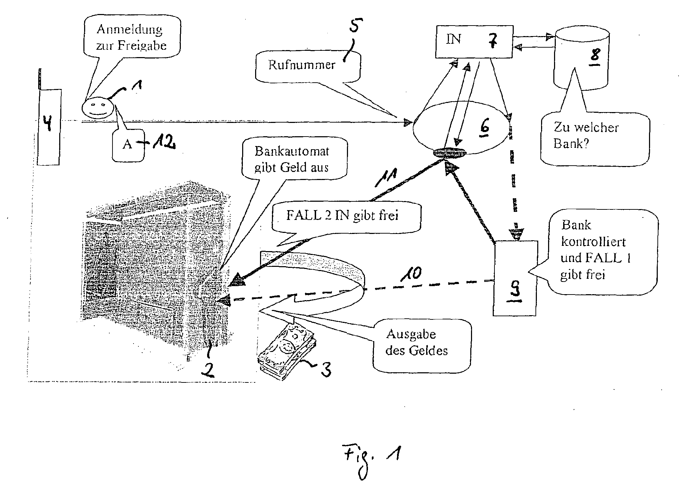

Ein Ausführungsbeispiel der Erfindung ist in der nachfolgenden Zeichnung näher dargestellt. In illustriert schematischer Übersicht zeigt die Figur 1 ein System bzw. ein Verfahren zur Durchführung der Erfindung. In diesem Beispiel möchte eine stilisierte Person 1 an einem Geldautomaten 2 Geld 3 abheben. Hierfür möchte die Person 1 in üblicher Weise eine Bank- bzw. Kreditkarte verwenden, die jedoch erfindungsgemäß standardmäßig gesperrt ist und demnach nicht ohne Weiteres verwendet werden kann.

Erfindungsgemäß ist es demnach vorgesehen, dass die Person 1 das Mobiltelefon 4 verwendet, um sich bzw. die Bankkarte zu einer Freigabe bzw. Entsperrung und somit zur Durchführung eines Auszahlungsvorganges von Geld an dem Geldautomaten anzumelden. Die Person 1 wählt somit mittels des Mobiltelefons 4 eine spezielle Rufnummer 5 eines Telekommunikationsnetzes 6, um einen entsprechenden Dienst zur Entsperrung der Bankkarte aufzurufen. Über das intelligente Netz 7 des Telekommunikationsnetzes 6 kann hierbei beispielsweise durch Abfrage einer Datenbank 8 zunächst festgestellt werden, zu welcher Bank die eingesetzte Karte gehört, beispielsweise durch Rückfrage und Identifizierung des Nutzers oder aber auch gegebenenfalls automatisch durch Auswertung der Netzkennung, die das anrufende Mobiltelefon 4 automatisch mitsendet.

Statt der Netzkennung kann es sich auch um die Gerätekennung, SIM-Kartenkennung oder ähnliche bereitgestellte Kennungen handeln. Nach Identifizierung der Person und/oder der Bankkarte kann eine Entsperrung der Karte erfolgen. Dies kann in einem ersten Fall z.B. dadurch erfolgen, dass zunächst eine Kommunikation mit der Bank 9 erfolgt, die gegebenenfalls weiterhin prüft, ob das zugrunde liegende Konto eine genügende Deckung aufweist. Darüber hinaus kann gegebenenfalls die Bank durch Rückfrage über das Telekommunikationssystem 6 weitere Identifizierungen oder Authentifizierungen vornehmen. Dies ist jedoch nicht zwingend notwendig. Es kann sodann beispielsweise die Bank unmittelbar über eine Kommunikation 10 mit dem Bankautomaten diesen Bankautomaten anweisen, dass er zu der festgestellten Karte Geld herausgeben kann, d.h. also dass die Karte, bezogen auf diesen speziellen Bankautomaten freigeschaltet bzw. entsperrt ist. Es wird sodann durch den Bankautomaten das Geld 3 an die Person 1 herausgegeben.

In einem anderen Fall kann die Freigabe unmittelbar oder nach entsprechender Rückfrage bei der Bank durch das Telekommunikationsnetz 6 freigegeben werden im Rahmen einer Telekommunikation 11 zwischen Netz- und Bankautomat. Auch hier erfolgt demnach die Entsperrung der Bankkarte bezogen auf den speziellen Bankautomaten, so dass dieser wiederum das Geld zur Auszahlung freigibt.

Die Figur 1 zeigt noch ergänzend die Möglichkeit einer weiteren Identifizierung der Person, z.B. durch eine Sprachanalyse. Hier kann die Person 1 durch das Telekommunikationssystem 6, z.B. durch ein darin laufendes Dialogsystem aufgefordert werden, ein bestimmtes Wort oder einen bestimmten Satz 12 zu sagen. Es kann sodann durch eine Überprüfung bestimmter Stimm- oder Sprachparameter festgestellt werden, ob es sich um diejenige Person handelt, die anhand der vorherigen Identifikation, wie beispielsweise anhand der übermittelten oder abgefragten Kennungen identifiziert wurde. Ist diese Identifikation positiv, so kann mit dem Verfahren wie vorbeschrieben fortgefahren werden durch die Entsperrung der Bankkarte.

Zusammenfassend kann festgestellt werden, dass das erfindungsgemäße Verfahren gegenüber dem Stand der Technik die Vorteile aufweist, dass ein Zahlungsmittel standardmäßig gesperrt ist und somit standardmäßig ein Missbrauch des Zahlungsmittels ausgeschlossen ist. Erst durch eine Entsperrung des Zahlungsmittels wird dieses zur Benutzung und somit zur Durchführung eines Zahlungsvorgangs freigegeben, wobei es für diese Entsperrung vorgesehen sein kann, dass eine Identifizierung und/oder Authentifizierung der nutzenden Person und/oder des Zahlungsmittels im Rahmen einer Telekommunikation durchgeführt wird. Ist diese Identifikation oder Authentifikation erfolgreich, so erfolgt die Entsperrung und der Zahlungsvorgang kann durchgeführt werden. Aufgrund der Tatsache, dass somit für jeden einzelnen Zahlungsvorgang eine Berechtigungsprüfung stattfindet, wird die Sicherheit im Umgang mit Zahlungsmitteln signifikant erhöht, insbesondere dadurch, dass es keine Zeiträume geben kann zwischen Verlust eines Zahlungsmittels und Feststellung des Verlustes, in denen ein unberechtigter Dritter missbräuchlich das Zahlungsmittel nutzen kann.

## Patentansprüche

1. Verfahren zur Durchführung eines Zahlungsvorgangs mit einem Zahlungsmittel, insbesondere einer Bank- oder Kreditkarte, an einer Vorrichtung zur Durchführung des Zahlungsvorgangs, **dadurch gekennzeichnet, dass**
a) das Zahlungsmittel standardmäßig für Zahlungsvorgänge, zumindest an der genannten Vorrichtung gesperrt ist, und
b) durch ein Anwählen einer Netzkennung (5) eines Telekommunikationsnetzes (6,7) mittels eines, insbesondere mobilen Kommunikationsgerätes (4) das Zahlungsmittel zur Durchführung des Zahlvorganges zumindest an der genannten Vorrichtung (2) entsperrt wird.

2. Verfahren nach Anspruch 1, **dadurch gekennzeichnet, dass** der Vorrichtung (2) wenigstens eine Netzkennung (5) eines Telekommunikationsnetzes (6,7) zugeordnet ist und durch Anwahl der Netzkennung (5) ein Zahlungsmittel nur für eine Zahlung an der Vorrichtung (2) entsperrt wird.

3. Verfahren nach einem der vorherigen Ansprüche, **dadurch gekennzeichnet, dass** durch Anwahl der Netzkennung (5) der Standort des Kommunikationsgerätes (4) ermittelt wird und das Zahlungsmittel entsperrt wird für eine Zahlung an wenigstens einer Vorrichtung (2) zur Durchführung des Zahlungsvorganges, welche sich in der Umgebung des ermittelten Standortes des Kommunikationsgerätes (4) befindet.

4. Verfahren nach einem der vorherigen Ansprüche, **dadurch gekennzeichnet, dass** eine angewählte Netzkennung (5) einem Dienstleister, insbesondere einem Bank- oder Kreditinstitut zugeordnet ist, welcher bei einer Anwahl das Zahlungsmittel zur Durchführung eines Zahlungsvorgangs zumindest an einer Vorrichtung (2) zur Durchführung des Bezahlvorgangs entsperrt.

5. Verfahren nach Anspruch 4, **dadurch gekennzeichnet, dass** das Zahlungsmittel nach einer Anwahl der Netzkennung gegenüber dem Dienstleister identifiziert und/oder verifiziert wird.

6. Verfahren nach Anspruch 5, **dadurch gekennzeichnet, dass** eine Identifizierung dadurch erfolgt, dass wenigstens ein Zahlungsmittel einem Kommunikationsgerät (4) zugeordnet ist, insbesondere anhand einer Geräte- und/oder Anschlusskennung des Kommunikationsgeräts (4).

7. Verfahren nach einem der vorherigen Ansprüche, **dadurch gekennzeichnet, dass** eine Netzkennung (5) einem Nutzer (1) zugeordnet ist, insbesondere zufällig, insbesondere wobei nach einer Anwahl eine Konvertierung dieser Netzkennung (5) in eine Netzkennung eines Dienstes zur Entsperrung erfolgt.

8. Verfahren nach einem der vorherigen Ansprüche, **dadurch gekennzeichnet, dass** eine Entsperrung für eine vorgegebene / vorgebbare Zeit erfolgt.

9. Verfahren nach einem der vorherigen Ansprüche, **dadurch gekennzeichnet, dass** ein entsperrtes Zahlungsmittel automatisch nach Beendigung des Zahlungsvorganges wieder gesperrt wird.

10. Verfahren nach einem der vorherigen Ansprüche, **dadurch gekennzeichnet, dass** mittels des Kommunikationsgeräts (4) eine Identifizierung des Zahlungsmittels und/oder der Person (1) erfolgt, welche dem Zahlungsmittel zugeordnet ist.

11. Verfahren nach Anspruch 10, **dadurch gekennzeichnet, dass** die Identifizierung erfolgt durch wenigstens einen der folgenden Punkte:
a) Eingabe einer Personen-Identifikations-Nummer (PIN) und/oder Transaktionnummer (TAN) am Kommunikationsgerät
b) Sprechen der Person in das Kommunikationsgerät (4)
c) Fotografieren der Person (1), insbesondere des Gesicht der Person (1) mittels des Kommunikationsgerätes (4)
d) Aufnahme eines Videos der Person (1), insbesondere des Gesichts der Person (1) mittels des Kommunikationsgeräts
e) Erfassen einer biometrischen Kennung der Person (1) mittels des Kommunikationsgeräts (4)
f) Durch den Besitz des Kommunikationsgeräts und/oder durch die vom Kommunikationsgerät (4) gesendete Kommunikationskennung

12. Verfahren nach Anspruch 11, **dadurch gekennzeichnet, dass** bei einem aufgenommenen Foto oder Video der Person (1) zur Bestätigung der Echtheit Proportionen zur dargestellten Person (1) und/oder der Bild- / Videohintergrund einer Überprüfung unterzogen wird, insbesondere hinsichtlich Inhalt und/oder Proportionen zur dargestellten Person.

13. Verfahren nach einem der vorherigen Ansprüche, **dadurch gekennzeichnet, dass** mit/nach einem Zahlungsvorgang eine erworbene Ware und/oder Dienstleistung mittels des Kommunikationsgeräts (4), insbesondere über denselben Kommunikationskanal der für die Entsperrung verwendet wird, übermittelt wird an den Nutzer (1).

14. System zur Durchführung eines Zahlungsvorganges mit einem Zahlungsmittel, insbesondere einer Bank- oder Kreditkarte, umfassend wenigstens eine Vorrichtung zur Durchführung des Zahlungvorganges, **dadurch gekennzeichnet, dass**
c) ein Zahlungsmittel standardmäßig für Zahlungsvorgänge an der wenigstens einen genannten Vorrichtung gesperrt ist, und
d) durch ein Anwählen einer Netzkennung (5) eines Telekommunikationsnetzes (6,7) mittels eines, insbesondere mobilen Kommunikationsgerätes (4) ein Zahlungsmittel zur Durchführung des Zahlungsvorganges an wenigstens einer der genannten Vorrichtungen (2) entsperrt wird.

15. System nach Anspruch 14, **dadurch gekennzeichnet, dass** ein Zahlungsmittel durch eine Bank- und/oder Kreditkarte gebildet ist und eine Vorrichtung (2) zur Durchführung des Zahlungsvorganges durch einen Geldautomaten gebildet ist an dem eine Person (1) Bargeld durch Bezahlung mit dem Zahlungsmittel erhält.

16. System nach einem der vorherigen Ansprüche 14 oder 15, **dadurch gekennzeichnet, dass** das Kommunikationsgerät (4) als ein Mobiltelefon ausgebildet ist.
